# FASCICULE DE BREVET EUROPEEN

(11) **EP 0 589 342 B1**
(45) Date de publication et mention de la délivrance du brevet: **03.01.1996**
(21) Numéro de dépôt: 93114819.1
(22) Date de dépôt: 15.09.1993
(51) Int. Cl.: H02K 21/24, H02K 37/12

(54) **Transducteur électromagnétique polyphasé à aimant permanent multipolaire**
Vielphasiger elektromagnetischer Wandler mit einem vielpoligen Dauermagnet
Multiphase electromagnetic transducer with a multipolar permanent magnet

(30) Priorité: 24.09.1992 FR 9211511
(43) Date de publication de la demande: 30.03.1994
(73) Titulaire: Eta SA Fabriques d'Ebauches, CH-2540 Granges (CH)
(72) Inventeur: Surmely, Gérard, CH-1400 Yverdon (CH); Taghezout, Daho, CH-1006 Lausanne (CH)
(74) Mandataire: Caron, Gérard

(56) Documents cités:
- EP-A- 0 458 056
- EP-A- 0 525 462
- WO-A-87/03751
- FR-A- 2 380 661
- US-A- 4 922 145

## Description

La présente invention concerne un transducteur électromagnétique à aimant permanent multipolaire. Plus particulièrement, la présente invention concerne un transducteur triphasé à aimant permanent multipolaire présentant X paires de pôles, X étant un nombre pair supérieur à deux, ce transducteur triphasé pouvant être utilisé comme transducteur électromécanique réversible.

Le transducteur électromagnétique de la présente invention est susceptible d'être utilisé comme moteur dans de nombreuses applications, par exemple pour l'entraînement de disques, de bobines ou de cassettes dans le domaine informatique ou dans le domaine audiovisuel. On peut aussi utiliser ce transducteur électromagnétique pour entraîner l'aiguille d'un indicateur analogique, tel qu'un compteur de vitesse dans une voiture ou une montre électronique.

Dans le cas de la montre électronique, on utilise généralement un moteur électromagnétique à aimant permanent bipolaire fonctionnant dans un mode pas à pas, le rotor effectuant par pas une rotation de 180°. Si la montre comporte une aiguille de secondes et que la fréquence des pas est de 1 Hz, il faut alors une démultiplication d'un facteur 30 entre le rotor du moteur et cette aiguille. La rotation du rotor de 180° par pas nécessite donc un système de roues servant à la démultiplication, ce qui entraîne des pertes d'énergie dues essentiellement aux frottements et engendre un bruit relativement important.

De manière générale, pour obtenir une rotation pas à pas quasi-continue avec un moteur à aimant permanent bipolaire, il est nécessaire d'augmenter la fréquence de fonctionnement du moteur et de prévoir un mécanisme de démultiplication entre le rotor de ce moteur et le dispositif entraîné par ce moteur. Ceci engendre inévitablement des pertes d'énergie supplémentaires et une augmentation des coûts de fabrication.

Des transducteurs électromagnétiques selon l'art antérieur sont décrit dans les documents US-A-4 922 145 et EP-A-04 580 567.

Un but de la présente invention est de fournir un transducteur électromagnétique permettant un fonctionnement pas à pas avec un petit déplacement angulaire du rotor par pas.

Un deuxième but de l'invention est de fournir un tel transducteur électromagnétique pouvant être facilement miniaturisé pour un coût de fabrication peu onéreux, tout en possédant un bon rendement énergétique.

Finalement, un troisième but de l'invention est de fournir un tel transducteur électromagnétique présentant une structure compacte qui assure un bon rendement pour le rapport entre l'énergie utile et le volume dudit transducteur.

La présente invention a donc pour objet un transducteur électromagnétique comprenant un stator et un rotor monté rotatif relativement à ce stator, ledit rotor étant susceptible de tourillonner autour d'un axe de rotation, défini par un axe de positionnement de ce rotor, et comportant un aimant permanent multipolaire, lequel définit un plan rotorique perpendiculaire audit axe de rotation et est formé par un ensemble de paires de pôles rotoriques disposées de manière circulaire autour dudit axe de rotation, le nombre de ces paires de pôles rotoriques étant pair et supérieur à deux, chaque paire de pôles rotoriques ayant un axe magnétique, orienté selon la direction dudit axe de rotation avec un sens opposé à celui des paires de pôles rotoriques adjacentes, et définissant un angle α, dont la valeur est égale à 360° divisé par ledit nombre de paires de pôles rotoriques, dans ledit plan rotorique relativement audit axe de rotation, ledit transducteur électromagnétique étant caractérisé en ce qu'il comporte N moyens d'alimentation magnétique associés respectivement à N branches de guidage du flux magnétique, N étant un nombre entier supérieur à deux, et en ce qu'il comprend des première et deuxième parties statoriques principales, la première partie statorique principale définissant N pôles magnétiques principaux, isolés magnétiquement l'un de l'autre par des zones de haute réluctance magnétique, et comprenant une première partie de superposition superposée audit aimant permanent multipolaire relativement à une projection dans ledit plan rotorique, chacun de ces pôles magnétiques principaux comprenant au moins un pôle magnétique secondaire, lequel est au moins partiellement superposé audit aimant permanent multipolaire relativement à une projection dans ledit plan rotorique, lesdits pôles magnétiques secondaires définissant un premier plan statorique parallèle audit plan rotorique, chaque pôle magnétique secondaire définissant un angle, dans ledit premier plan statorique relativement audit axe de rotation, dont la valeur est sensiblement égale à celle dudit angle *α,* chaque pôle secondaire de chacun desdits pôles magnétiques principaux étant décalé angulairement, relativement à chaque pôle secondaire de chacun des deux pôles magnétiques principaux adjacents et relativement audit axe de rotation, d'un angle de déviation dont la valeur modulo la valeur dudit angle *α* est égale à ladite valeur de cet angle α divisée par N, ladite deuxième partie statorique principale définissant un pôle magnétique de retour dont une deuxième partie de superposition est superposée audit aimant permanent multipolaire relativement à une projection dans ledit plan rotorique, cette deuxième partie de superposition définissant un deuxième plan statorique parallèle audit plan rotorique, lesdits premier et deuxième plans statoriques étant situés de part et d'autre dudit plan rotorique, chacune desdites branches de guidage du flux magnétique ayant une première extrémité reliée magnétiquement à undit pôle magnétique principal différent et une seconde extrémité reliée magnétiquement audit pôle de retour.

Selon une caractéristique supplémentaire du transducteur selon l'invention, chacun desdits pôles magnétiques principaux de ladite première partie statorique principale comprend au moins deux pôles magnétiques secondaires, les pôles magnétiques secondaires adjacents appartenant à un même pôle magnétique principal étant décalé angulairement l'un par rapport à l'autre, dans ledit premier plan statorique et relativement audit axe de rotation, d'un angle dont la valeur est sensiblement égale à deux fois la valeur dudit angle *α.*

Selon une autre caractéristique du transducteur selon l'invention, les première et deuxième parties statoriques principales comprennent respectivement des première et deuxième parties non-superposées audit aimant permanent multipolaire, relativement à une projection dans ledit plan rotorique, ces première et deuxième parties non-superposées étant respectivement situées dans des premier et deuxième plans généraux parallèles entre eux. De plus, les branches de guidage du flux magnétique sont situées dans la région comprise entre ces premier et deuxième plans généraux.

Selon un mode de réalisation particulier de l'invention, la première ou la deuxième partie statorique principale est entièrement plane.

Dans un mode de réalisation principal de l'invention, le pôle magnétique de retour dudit transducteur appartenant à la deuxième partie statorique principale comprend également des pôles secondaires superposés, relativement à une projection dans ledit plan rotorique, au moins partiellement auxdits pôles secondaires de la première partie statorique principale et au moins partiellement audit aimant permanent multipolaire, les pôles secondaires de la deuxième partie statorique ayant une distribution angulaire, dans ledit deuxième plan statorique relativement audit axe de rotation, identique à celle des pôles secondaires de la première partie statorique principale.

Selon des modes de réalisation particuliers du transducteur selon l'invention, chaque pôle magnétique secondaire de la première partie statorique principale et/ou de la deuxième partie statorique principale est formé soit par une dent différente d'un créneau circulaire, soit par une dent différente reliée aux autres dents d'un même pôle principal par un pont de rigidification, soit encore par un sommet d'une ondulation formant une section annulaire, ce sommet étant situé du côté dudit aimant permanent multipolaire relativement à un plan milieu de la surface de cette ondulation.

Ensuite, selon des caractéristiques spécifiques de l'invention, la première partie de superposition ou/et la deuxième partie de superposition présente(nt) au moins partiellement une surépaisseur en direction de l'aimant permanent multipolaire relativement et respectivement au premier plan général ou/et au deuxième plan général du stator, ou est au moins partiellement emboutie en direction de l'aimant permanent multipolaire relativement et respectivement au premier plan général ou/et au deuxième plan général du stator.

Grâce aux caractéristiques de l'invention décrite ci-avant, les divers buts de l'invention sont atteints.

D'autres caractéristiques de l'invention ressortiront encore mieux à la lecture de la description suivante, faite en référence aux dessins annexés à titre non limitatif, et dans lesquels :
- la figure 1 est une vue de dessus schématique d'un premier mode de réalisation d'un transducteur électromagnétique selon l'invention;
- la figure 2 est une vue en coupe de la figure 1 selon la ligne de coupe II - II;
- la figure 3 est une vue de dessus schématique d'une deuxième partie statorique principale dudit premier mode de réalisation;
- la figure 4 représente une variante selon l'invention du premier mode de réalisation d'un transducteur électromagnétique représenté à la figure 1;
- la figure 5 est une vue en coupe de la figure 4 selon la ligne de coupe V - V;
- la figure 6 est une vue de dessus schématique d'une deuxième partie statorique principale de ladite variante représentée à la figure 4;
- la figure 7 représente la deuxième partie statorique principale d'un deuxième mode de réalisation d'un transducteur selon l'invention;
- la figure 8 est une vue en coupe de la figure 7 selon la ligne de coupe VIII - VIII;
- la figure 9 est une vue de dessus d'une deuxième partie statorique principale d'un troisième mode de réalisation d'un transducteur selon l'invention.

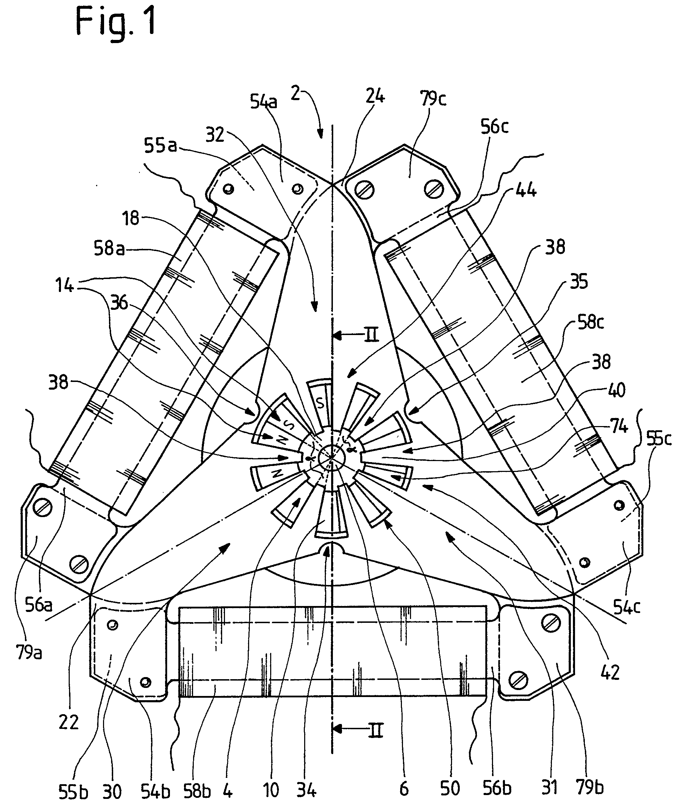

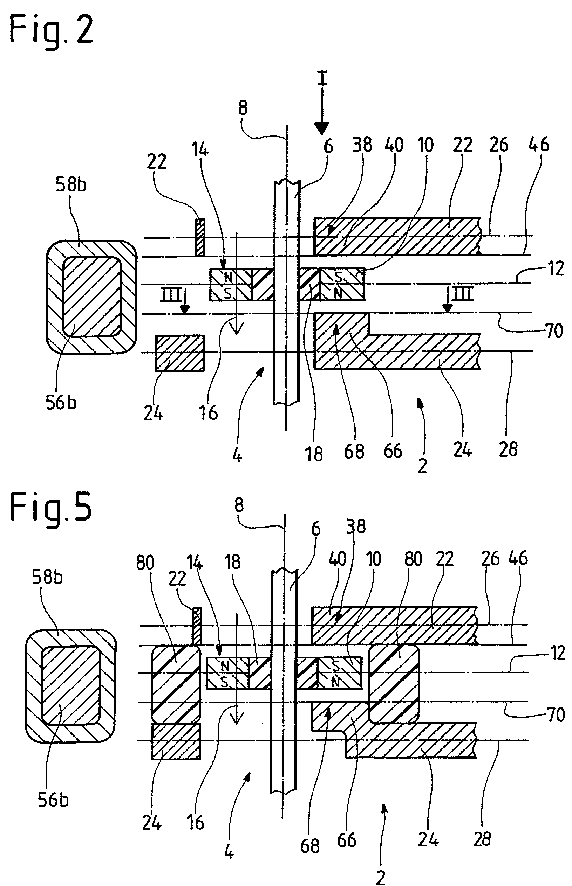

En se référant ci-après aux figures 1 à 3, on décrira un premier mode de réalisation d'un transducteur électromagnétique selon l'invention.

Ce transducteur électromagnétique comprend un stator 2 et un rotor 4 montés rotatifs relativement à ce stator 2. Ce rotor 4 comprend un axe de positionnement 6, lequel définit un axe de rotation 8, et un aimant permanent multipolaire 10, lequel définit un plan rotorique 12 perpendiculaire à l'axe de rotation 8. L'aimant multipolaire 10 est formé par un ensemble de paires de pôles rotoriques 14 présentant un axe magnétique 16 sensiblement parallèle à l'axe de rotation 8 du rotor.

On remarquera que le sens de l'axe magnétique 16 d'une paire de pôles rotoriques est de sens opposé aux axes magnétiques des deux paires de pôles rotoriques adjacentes. Le nombre de paires de pôles rotoriques composant l'aimant permanent multipolaire 10 est un nombre pair supérieur à deux. Les paires de pôles rotoriques sont disposées de manière circulaire autour de l'axe de rotation 8.

Dans le présent mode de réalisation, l'aimant permanent multipolaire 10 présente la forme d'un anneau, comprenant 20 paires de pôles rotoriques 14, un disque amagnétique 18 étant disposé au centre de cet anneau et monté sur l'axe de positionnement 6 du rotor 4 de manière que l'aimant permanent multipolaire 10 soit solidaire de l'axe de positionnement 6.

On notera que l'axe de positionnement 6 du rotor 4 peut être monté rotatif relativement au stator 2 par exemple à l'aide d'une cage de positionnement (non représentée) ou par n'importe quel autre moyen de montage du rotor d'un transducteur, en particulier d'un moteur, connu de l'homme du métier.

Dans le premier mode de réalisation représenté sur la figure 1, chacune des paires de pôles rotoriques 14 définit dans le plan rotorique 12 un même angle α relativement à l'axe de rotation 8 du rotor. Ainsi, dans ce premier mode de réalisation l'angle *α* est égal à 360°/20 = 18°. On notera cependant que l'angle *α* défini par une paire de pôles rotorique peut englober une partie non-magnétisée située entre deux paires de pôles rotoriques 14.

Le stator 2 comprend une première partie statorique principale 22 et une deuxième partie statorique principale 24. La première partie statorique principale 22 est située dans un premier plan général 26, alors que la deuxième partie statorique principale 24 est située dans un deuxième plan général 28 du transducteur. Ces deux plans généraux 26 et 28 sont disposés de part et d'autre du plan rotorique 12.

La première partie statorique 22 définit trois pôles magnétiques principaux 30, 31 et 32. Ces trois pôles magnétiques sont isolés magnétiquement l'un de l'autre par des isthmes 34, 35 et 36, ces isthmes présentant une haute réluctance magnétique. Chacun des pôles principaux 30, 31 et 32 comprend au moins un pôle magnétique secondaire 38. On notera ici que le terme pôle correspond toujours à un pôle magnétique dans la présente description. De plus, un pôle est matérialisé par une région d'une pièce qui le définit.

Dans ce premier mode de réalisation, chacun des pôles principaux comprend trois pôles secondaires 38. Chaque pôle secondaire 38 est formé par une dent 40 s'étendant depuis l'épanouissement 42 du pôle magnétique principal correspondant en direction de l'axe de rotation 8. L'ensemble des dents 40 forme un premier créneau circulaire 44 dont les merlons sont formés par les dents 40. Ce premier créneau circulaire 44 est agencé de telle manière que les dents 40 sont au moins partiellement superposées à l'aimant permanent multipolaire 10 relativement à une projection dans le plan rotorique 12.

L'ensemble des pôles secondaires 38 définit un premier plan statorique 46, ce plan statorique 46 étant parallèle au plan rotorique 12. Chacune des dents 40 formant les pôles secondaires 38 définit un angle dans le plan statorique 46 relativement à l'axe de rotation 8 égal à l'angle *α* défini par chacune des paires de pôles rotoriques 14 de l'aimant permanent multipolaire 10. Ainsi, chacune des dents définit un angle à l'axe de rotation 8 égal à 18° dans ce premier mode de réalisation d'un transducteur selon l'invention.

Chacun des merlons formé par une dent 40 est séparé des deux merlons adjacents par deux embrasures 50. L'angle formé par des embrasures séparant deux dents d'un même pôle magnétique principal 30, 31 ou 32 définit dans le premier plan statorique 46 relativement à l'axe de rotation 8 un angle égal à l'angle α défini par chacune des dents 40 et par chacune des paires de pôles rotoriques 14 de l'aimant permanent multipolaire 10.

Par contre, chacune des dents 38 appartenant à un même pôle magnétique principal 30, 31 ou 32 est décalée angulairement relativement à un pôle secondaire appartenant à un pôle magnétique principal adjacent d'un angle dont la valeur modulo la valeur de l'angle *α* est égale à la valeur de cet angle *α* divisé par le nombre de phases du transducteur, à savoir trois phases dans le premier mode de réalisation. Par l'expression modulo la valeur de l'angle *α,* on comprend le résultat de la division entière par la valeur de l'angle α. Ainsi, dans le cas du premier mode de réalisation présenté ici, le décalage angulaire entre une dent 40 appartenant à un premier pôle magnétique principal et une dent 40 appartenant à un pôle magnétique principal adjacent est égal à un nombre entier de fois 18° plus 6°. Il résulte de cette configuration que les embrasures séparant deux dents 40 appartenant à des pôles magnétiques principaux différents définissent, dans le premier plan statorique 46 relativement à l'axe de rotation 8, un angle dont la valeur modulo la valeur de l'angle α est aussi égal à 6°.

Chacun des trois pôles magnétiques principaux 30, 31 ou 32 comprend respectivement une oreille de fixation 54a, 54b ou 54c. Chaque oreille de fixation 54a, 54b ou 54c permet d'assurer respectivement le contact magnétique avec une première extrémité 55a, 55b ou 55c d'une branche de guidage du flux magnétique 56a, 56b ou 56c sur laquelle est montée respectivement une bobine 58a, 58b ou 58c.

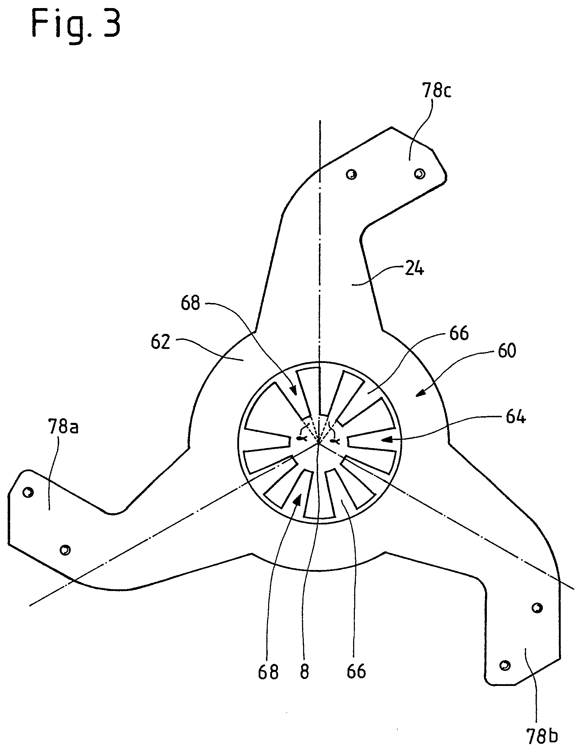

Sur la figure 3 est représentée une vue de dessus de la deuxième partie statorique principale 24. Cette deuxième partie statorique principale 24 définit un seul pôle magnétique de retour 60. Ce pôle magnétique de retour est défini par une partie annulaire 62 et par un deuxième créneau circulaire 64 sensiblement identique au premier créneau circulaire 44. Ce deuxième créneau circulaire 64 comporte des dents 66 définissant également des pôles magnétiques secondaires 68, l'ensemble des dents 66 définissant les pôles secondaires 68 définit un deuxième plan statorique 70. Ce deuxième plan statorique 70 est situé de l'autre côté du premier plan statorique 46 relativement au plan rotorique 12. De manière préférée, la distance séparant le deuxième plan statorique 70 du plan rotorique 12 est sensiblement égale à la distance séparant ce plan rotorique 12 du premier plan statorique 46.

Les dents 66 du deuxième créneau circulaire 64 sont au moins partiellement superposées à l'aimant permanent multipolaire 10. Les merlons formés par les dents 66 du deuxième créneau circulaire 64, ainsi que les embrasures séparant ces merlons présentent une distribution angulaire, dans le deuxième plan statorique 70 relativement à l'axe de rotation 8, identique à ladite distribution angulaire du premier créneau circulaire 44 de la première partie statorique 22.

Afin de forcer le flux magnétique engendré par l'une quelconques des bobines 58a, 58b et 58c à se propager à travers les paires de pôles rotoriques 14 de l'aimant permanent multipolaire 10, le créneau circulaire 66 présente une surépaisseur en direction du plan rotorique 12 relativement au reste de la deuxième partie statorique principale 24 située dans le deuxième plan général 28 de ce transducteur. On remarquera qu'il a été prévu que la région présentant la surépaisseur soit entièrement comprise, en superposition relativement au plan rotorique 12, dans l'ouverture circulaire 74 à l'intérieur de laquelle est formé le premier créneau circulaire 44 de la première partie statorique 22. La deuxième partie statorique principale 24 comprend encore trois oreilles de fixation 78a, 78b et 78c, chacune de ces oreilles étant respectivement reliée à une seconde extrémité 79a, 79b ou 79c d'une branche de guidage du flux magnétique différente 56a, 56b ou 56c.

Le transducteur selon l'invention représenté sur les figures 1 à 3 définit trois circuits magnétiques principaux, chacun de ces circuits étant associé à une bobine différente 58a, 58b ou 58c. De plus, chacun de ces circuits magnétiques principaux est découplé magnétiquement des deux autres circuits magnétiques principaux. Chaque circuit magnétique principal est formé par un pôle magnétique principal différent 30, 31 ou 32, par la branche de guidage du flux magnétique 56a, 56b ou 56c reliée à ce pôle magnétique principal, ainsi que par le pôle de retour défini par la deuxième partie statorique principale 24. On notera que la structure du transducteur selon l'invention présente l'avantage d'être très peu sensible aux champs magnétiques extérieurs.

Etant donné la configuration des dents 40 du premier créneau circulaire 44, ainsi que la configuration correspondante des dents 66 du deuxième créneau circulaire 64, ce transducteur peut aisément fonctionner en mode pas à pas. On notera qu'il est possible avec un aimant multipolaire comprenant vingt paires de pôles magnétiques d'effectuer soixante pas dans un sens donné par tour du rotor 4.

La configuration triphasée du transducteur selon le premier mode de réalisation de l'invention permet donc d'effectuer soixante pas par tour à l'aide d'un aimant multipolaire 10 comprenant seulement vingt paires de pôles rotoriques 14 ayant chacune un axe magnétique orienté coaxialement à l'axe de rotation 8. Dans le cas où ce transducteur est utilisé pour faire avancer l'aiguille des secondes d'un compteur de temps, le transducteur selon le premier mode de réalisation de l'invention décrit ci-avant permet de faire avancer cette aiguille aisément avec une fréquence de 1 Hz par entraînement direct.

On notera aussi que le transducteur selon le premier mode de réalisation de l'invention présente une structure compacte de laquelle résulte un encombrement minimal. Ensuite, la position centrale du rotor relativement au stator engendre un maximum de place disponible pour l'aimant permanent multipolaire 10.

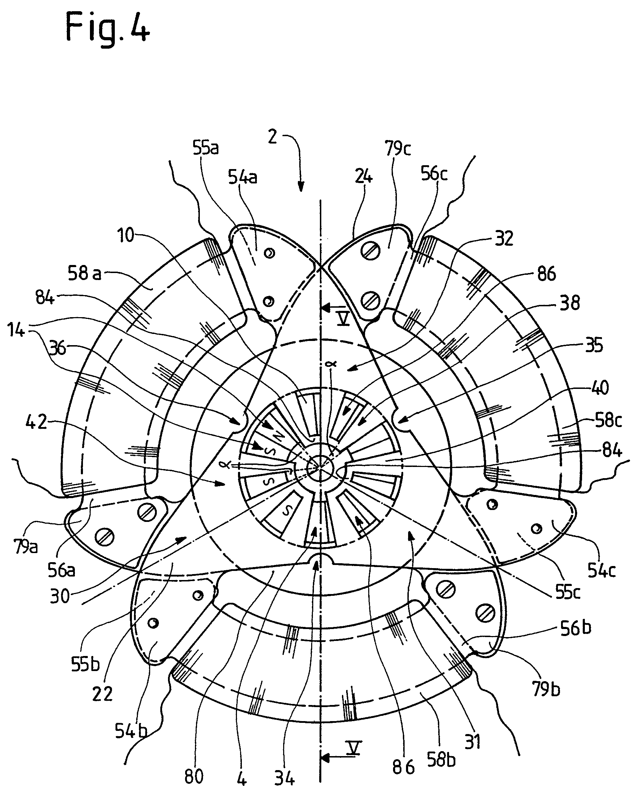

En se référant ci-après aux figures 4 à 6, on décrira une variante du premier mode de réalisation d'un transducteur électromagnétique selon l'invention.

Les références déjà commentées en détail dans le premier mode de réalisation décrit ci-avant ne seront pas ànouveau commentées pour la description de cette variante.

On remarquera premièrement que la configuration des branches de guidage du flux magnétique 56a, 56b et 56c présentent une forme en arc de cercle, ainsi que les bobines 58a, 58b et 58c montées sur ces branches de guidage du flux magnétique.

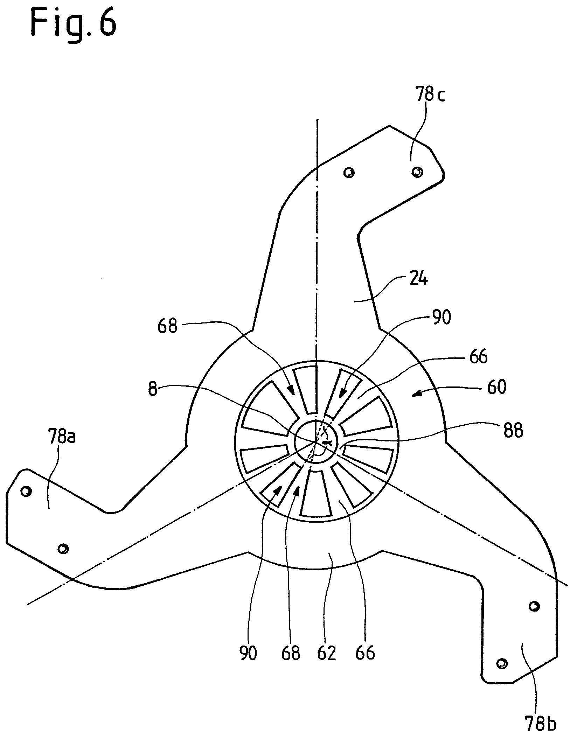

Ensuite, il a été prévu un anneau de stabilisation 80, amagnétique et de préférence non-conducteur, disposé entre la première partie statorique principale 22 et la deuxième partie statorique principale 24. Comme cela est rendu visible sur la figure 5, cet anneau de stabilisation 80 est maintenu fixe relativement à un déplacement latéral grâce aux dents 66 formant les pôles secondaires 68 du pôle de retour 60. En effet, les dents 66 appartenant à la deuxième partie statorique principale 24 ont été embouties en direction de l'aimant permanent multipolaire 10 relativement au deuxième plan général 28 dans lequel est situé l'essentiel de la deuxième partie statorique principale 24. La différence de niveau engendrée par cet emboutissage permet de caler l'anneau de stabilisation 80. Cet anneau de stabilisation 80 sert de pièce intercalaire entre les deux parties statoriques principales 22 et 24. Elle sert ainsi à maintenir fixe la distance séparant les deux parties statoriques principales 22 et 24.

Sur la figure 4, on observe que les dents 40 formant les pôles secondaires 38 d'un même pôle principal 30, 31 ou 32 appartenant à la première partie statorique principale 22 sont reliées entre elles par un pont de rigidification 84. Ainsi, les dents 40 forment les montants de fenêtres 86, ces fenêtres 86 correspondant sensiblement aux embrasures du premier mode de réalisation de l'invention décrit à l'aide des figures 1 à 3. De manière préférée, le pont de rigidication 84 est mince entre les dents 40, formant à la limite un isthme.

On notera que la distribution angulaire, dans le premier plan statorique 46, des dents 40 formant les pôles secondaires 38 de la première partie statorique 22 et des fenêtres 86 est respectivement identique à la distribution angulaire des merlons et des embrasures du premier mode de réalisation décrit à l'aide des figures 1 à 3.

On remarquera encore que de manière préférée les trois ponts de rigidification 84 ne sont pas superposés à l'aimant permanent multipolaire 10 relativement à une projection dans le plan rotorique 12.

De manière similaire à la première partie statorique 22 de la variante décrite ici, la deuxième partie statorique 24 de cette variante représentée à la figure 6 comprend un pont de rigidification circulaire 88 reliant les dents 66 définissant les pôles secondaires 68 du pôle de retour 60. A nouveau, les dents 66 forment les montants d'un ensemble de fenêtres 90 disposées de manière circulaire autour de l'axe de rotation 8. La distribution angulaire des dents 66 formant les pôles secondaires 68 de cette variante est identique à la distribution angulaire des dents 66 du premier mode de réalisation de la deuxième partie statorique principale représenté à la figure 3.

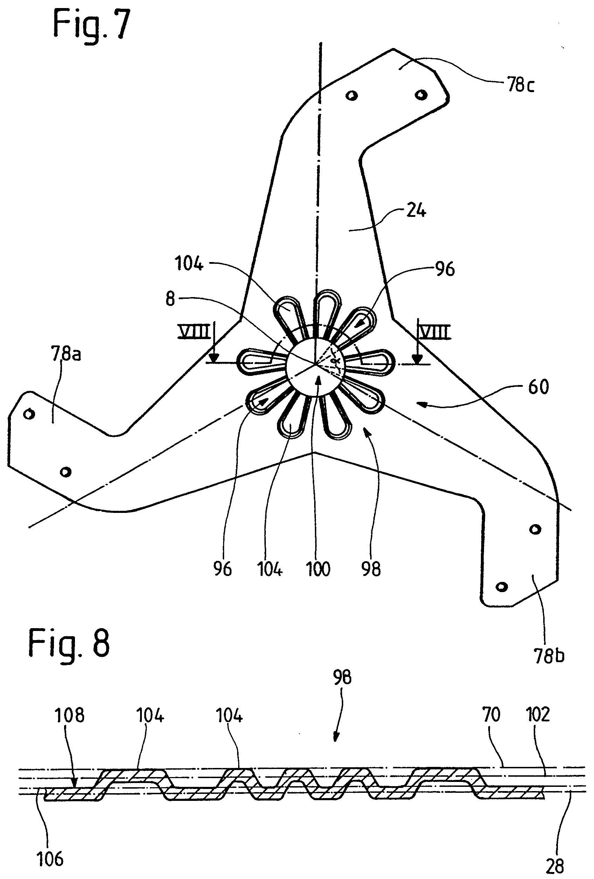

En se référant ci-après aux figures 7 et 8, on décrira un deuxième mode de réalisation d'un transducteur électromagnétique selon l'invention.

Ce deuxième mode de réalisation d'un transducteur électromagnétique selon l'invention diffère du premier mode de réalisation par la forme de la deuxième partie statorique principale 24 et par la formation des pôles secondaires 68 du pôle de retour 60 formé par cette deuxième partie statorique principale 24 représentée sur la figure 7. Cette deuxième partie statorique 24 présente dans sa région centrale une région annulaire ondulée, nommée ci-après ondulation circulaire 98, se développant autour de l'axe de rotation 8 du rotor 4 (non représenté sur la figure 7). Cette ondulation circulaire 98 présente sensiblement la forme d'un anneau définissant une ouverture circulaire 100 centrée sur l'axe de rotation 8.

L'ondulation circulaire 98 est réalisée de telle manière que les sommets 104 de cette ondulation circulaire 98 situés du côté de l'aimant permanent multipolaire 10 (non représenté sur la figure 7) relativement à un plan milieu 102 de la surface de cette ondulation 98 définissent les pôles secondaires 68 du pôle magnétique de retour 60. Ensuite, le deuxième plan statorique 70, défini sensiblement par l'ensemble des sommets 104 de l'ondulation circulaire 98, est situé du côté de l'aimant permanent multipolaire relativement au plan 106 défini par la surface 108 de cette deuxième partie statorique principale 24 en dehors de l'ondulation 98.

A nouveau, les sommets 104 formant les pôles secondaires 68 présentent une distribution angulaire identique aux pôles secondaires 38 du premier mode de réalisation selon l'invention. Ensuite, ces sommets 104 sont au moins partiellement superposés audit aimant multipolaire et audits pôles secondaires de la première partie statorique 24 (non représentée sur la figure 7) relativement à une projection dans ledit plan rotorique 12.

On notera que dans une variante (non-représentée) de ce deuxième mode de réalisation d'un transducteur selon l'invention, il est prévu une ondulation, similaire à celle décrite ci-avant, pour les pôles magnétiques secondaires 38 d'un même pôle principal 30, 31 ou 32 appartenant à la première partie statorique principale 22 (en référence à la figure 1). Dans cette variante, il est prévu trois sections annulaires ondulées, chacune de ces trois sections annulaires ondulées appartenant à un même pôle magnétique principal de la première partie statorique principale, les sommets de l'ondulation situés du côté de l'aimant permanent multipolaire 10 (en référence à la figure 1) définissant les pôles secondaires 38 de cette première partie statorique principale.

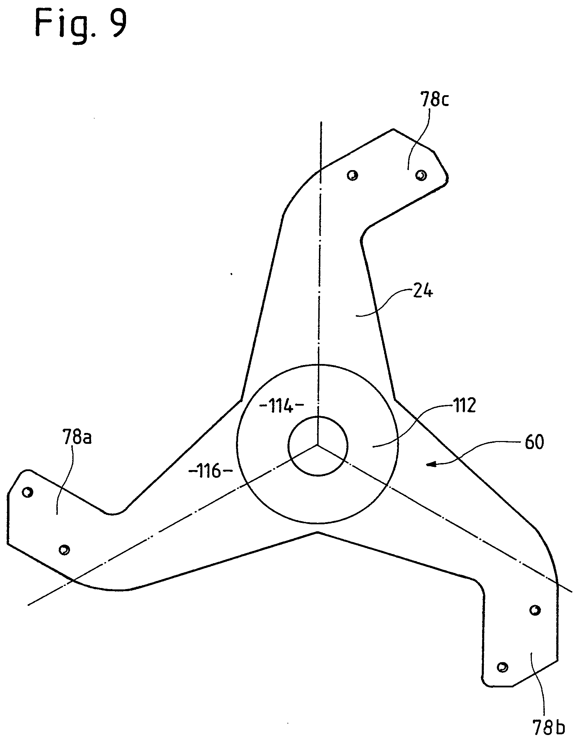

En se référant ci-après à la figure 9, on décrira un troisième mode de réalisation simplifié de la deuxième partie statorique principale 24.

Dans ce mode de réalisation simplifié, le pôle de retour 60 défini par la deuxième partie statorique principale 24 ne comprend plus de pôles secondaires. Seule une partie annulaire pleine 112, dont la surface 114 est située dans un plan différent de la surface complémentaire 116 de la deuxième partie statorique principale 24, est prévue.

La surface 114 de la partie annulaire 112 définit un deuxième plan statorique, lequel est situé du côté de l'aimant permanent multipolaire (non représenté dans la figure 9) relativement à la surface 116 de la partie complémentaire de la deuxième partie statorique principale 24.

De manière générale, on remarquera que le mode de réalisation choisi pour la première partie statorique principale peut être indépendant du mode de réalisation choisi pour la deuxième partie statorique principale. Ensuite, la configuration des branches de guidage du flux magnétique 56a, 56b et 56c, ainsi que leur disposition peuvent présenter de multiples variantes.

On notera encore que dans un mode de réalisation simplifié, les première et deuxième parties statoriques principales peuvent être entièrement planes. Dans ce cas, il est possible de prévoir une configuration dans laquelle la région de superposition entre les deux parties statoriques principales est minimale en-dehors de la région de l'aimant permanent multipolaire, ceci afin de diminuer au maximum les pertes de flux magnétique.

Finalement, on remarquera que l'invention décrite ici à l'aide d'un transducteur triphasé peut sans autre être appliquée à un transducteur comprenant plus de phases, notamment un transducteur pentaphasé.

## Revendications

1. Transducteur électromagnétique comprenant un stator (2) et un rotor (4) monté rotatif relativement à ce stator, ledit rotor étant susceptible de tourillonner autour d'un axe de rotation (8), défini par un axe de positionnement (6) de ce rotor, et comportant un aimant permanent multipolaire (10), lequel définit un plan rotorique (12) perpendiculaire audit axe de rotation et est formé par un ensemble de paires de pôles rotoriques (14) disposées de manière circulaire autour dudit axe de rotation, le nombre de ces paires de pôles rotoriques (14) étant pair et supérieur à deux, chaque paire de pôles rotoriques ayant un axe magnétique (16), orienté selon la direction dudit axe de rotation (8) avec un sens opposé à celui des paires de pôles rotoriques adjacentes, et définissant un angle α, dont la valeur est égale à 360° divisé par ledit nombre de paires de pôles rotoriques, dans ledit plan rotorique relativement audit axe de rotation, ledit transducteur électromagnétique étant caractérisé en ce qu'il comporte N moyens d'alimentation magnétique (58a, 58b, 58c) associés respectivement à N branches (56a, 56b, 56c) de guidage du flux magnétique, N étant un nombre entier supérieur à deux, et en ce qu'il comprend des première et deuxième parties statoriques principales (22 et 24), la première partie statorique principale (22) définissant N pôles magnétiques principaux (30, 31, 32), isolés magnétiquement l'un de l'autre par des zones de haute réluctance magnétique (34, 35, 36), et comprenant une première partie de superposition superposée audit aimant permanent multipolaire relativement à une projection dans ledit plan rotorique (12), chacun de ces pôles magnétiques principaux comprenant au moins un pôle magnétique secondaire (38), lequel est au moins partiellement superposé audit aimant permanent multipolaire (10) relativement à une projection dans ledit plan rotorique, lesdits pôles magnétiques secondaires définissant un premier plan statorique (46) parallèle audit plan rotorique, chaque pôle magnétique secondaire définissant un angle, dans ledit premier plan statorique relativement audit axe de rotation, dont la valeur est sensiblement égale à celle dudit angle *α,* chaque pôle secondaire de chacun desdits pôles magnétiques principaux étant décalé angulairement, relativement à chaque pôle secondaire de chacun des deux pôles magnétiques principaux adjacents et relativement audit axe de rotation, d'un angle de déviation dont la valeur modulo la valeur dudit angle α est égale à ladite valeur de cet angle *α* divisée par N, ladite deuxième partie principale (24) définissant un pôle magnétique de retour (60) dont une deuxième partie de superposition est superposée audit aimant permanent multipolaire relativement à une projection dans ledit plan rotorique (12), cette deuxième partie de superposition définissant un deuxième plan statorique (70) parallèle audit plan rotorique, lesdits premier et deuxième plans statoriques étant situés de part et d'autre dudit plan rotorique, chacune desdites branches de guidage du flux magnétique ayant une première extrémité (55a, 55b, 55c) reliée magnétiquement à undit pôle magnétique principal différent et une seconde extrémité (79a, 79b, 79c) reliée magnétiquement audit pôle de retour.

2. Transducteur selon la revendication 1, caractérisé en ce que chacun desdits pôles magnétiques principaux (30, 31, 32) de ladite première partie statorique principale (22) comprend au moins deux pôles magnétiques secondaires (38), les pôles magnétiques secondaires adjacents appartenant à un même pôle magnétique principal étant décalé angulairement l'un relativement à l'autre, dans ledit premier plan statorique (46) et relativement audit axe de rotation (8), d'un angle dont la valeur est sensiblement égale à deux fois la valeur dudit angle *α.*

3. Transducteur selon la revendication 2, caractérisé en ce que lesdites première et deuxième parties statoriques principales (22 et 24) comprennent respectivement des première et deuxième parties non-superposées audit aimant permanent relativement à une projection dans ledit plan rotorique (12), ces première et deuxième parties non-superposées étant respectivement situées dans des premier et deuxième plans généraux (26 et 28) parallèles entre eux, lesdites branches (56a, 56b, 56c) de guidage du flux magnétique étant situées dans la région comprise entre ces premier et deuxième plans généraux, chacun desdits moyens d'alimentation magnétique (58a, 58b, 58c) étant formé par une bobine montée sur unedite branche différente.

4. Transducteur selon la revendication 2 ou 3, caractérisé en ce que ladite première partie statorique principale (22) est entièrement plane et située dans ledit premier plan général (26).

5. Transducteur selon la revendication 2 ou 3, caractérisé en ce que la première partie de superposition de ladite première partie statorique principale (22) présente au moins partiellement une surépaisseur en direction dudit aimant permanent multipolaire (10) relativement audit premier plan général (26).

6. Transducteur selon la revendication 2 ou 3, caractérisé en ce que ladite première partie de superposition de ladite première partie statorique principale (22) est au moins partiellement emboutie en direction dudit aimant permanent multipolaire (10) relativement audit premier plan général (26).

7. Transducteur électromagnétique selon l'une quelconque des revendications 2 à 6, caractérisé en ce que lesdits pôles secondaires (38) de ladite première partie statorique principale (22) sont formés par les dents (40) d'un premier créneau circulaire (44).

8. Transducteur selon l'une quelconque des revendications 2 à 6, caractérisé en ce que les pôles secondaires (38) appartenant à un même pôle magnétique principal (30, 31, 32) de ladite première partie statorique principale (22) sont formés par des dents (40) reliées entre elles par un pont de rigidification (84) de manière à définir au moins une fenêtre (86).

9. Transducteur selon la revendication 2 ou 3, caractérisé en ce que la première partie de superposition de ladite première partie statorique principale (22) est ondulée, chacun desdits pôles magnétiques secondaires (38) de cette première partie statorique principale étant formé par un sommet de cette première partie de superposition ondulée, ce sommet étant situé du côté dudit aimant permanent multipolaire (10) relativement à un plan milieu de la surface de cette première partie de superposition ondulée, cette dernière formant N sections annulaires ondulées, chacune de ces sections annulaires ondulées appartenant à un pôle magnétique principal (30, 31, 32) différent.

10. Transducteur selon l'une quelconques des revendications 2 à 9, caractérisé en ce que ladite deuxième partie de superposition définit une partie annulaire pleine (112) de ladite deuxième partie statorique principale (24).

11. Transducteur selon l'une quelconque des revendications 2 à 9, caractérisé en ce que ledit pôle magnétique de retour (60) de ladite deuxième partie statorique principale (24) comprend également des pôles secondaires (68) superposés, relativement à une projection dans ledit plan rotorique (12), au moins partiellement audits pôles secondaires (38) de ladite première partie statorique principale (22) et au moins partiellement audit aimant permanent multipolaire (10), les pôles secondaires (68) de la deuxième partie statorique principale ayant une distribution angulaire, dans ledit deuxième plan statorique (70) relativement audit axe de rotation (8), identique à celle des pôles secondaires (38) de la première partie statorique principale.

12. Transducteur selon la revendication 11, caractérisé en ce que lesdites première et deuxième parties de superposition sont entièrement superposées l'une à l'autre relativement à une projection dans ledit plan rotorique (12).

13. Transducteur selon la revendication 11 ou 12, caractérisé en ce que lesdits pôles secondaires (68) dudit pôle magnétique de retour (60) sont formés par les dents (66) d'un deuxième créneau circulaire (64).

14. Transducteur selon la revendication 11 ou 12, caractérisé en ce que lesdits pôles secondaires (68) dudit pôle magnétique de retour (60) sont formés par des dents (66) reliées entre elles par un pont de rigidification circulaire (88) de manière à définir un ensemble de fenêtres (90) disposées circulairement autour dudit axe de rotation (8).

15. Transducteur électromagnétique selon l'une quelconque des revendications 10 à 14, caractérisé en ce que ladite deuxième partie de superposition de ladite deuxième partie statorique principale (24) présente au moins partiellement une surépaisseur en direction dudit aimant permanent multipolaire (10) relativement audit deuxième plan général (28).

16. Transducteur selon l'une quelconque des revendications 10 à 14, caractérisé en ce que ladite deuxième partie de superposition est au moins partiellement emboutie en direction dudit aimant permanent multipolaire (10) relativement audit deuxième plan général (28).

17. Transducteur selon la revendication 12 ou 13, caractérisé en ce que ladite deuxième partie de superposition présente une ondulation (98), chacun desdits pôles secondaires (68) dudit pôle magnétique de retour (60) étant formé par un sommet (104) de cette ondulation, ce sommet étant situé du côté dudit aimant permanent multipolaire (10) relativement au plan milieu (102) de la surface de cette ondulation (98).

18. Transducteur électromagnétique selon l'une quelconque des revendications 1 à 17, caractérisé en ce qu'il comprend un anneau de stabilisation (80) disposé entre lesdites première et deuxième parties statoriques principales (22 et 24).

19. Transducteur selon l'une quelconque des revendications précédentes, caractérisé en ce qu'il est du type triphasé, N étant égal à 3.

## Patentansprüche

1. Elektromagnetischer Wandler mit einem Stator (2) und einem Rotor (4), der drehbeweglich relativ zu diesem Stator angeordnet ist, welcher Rotor um eine Drehachse (8) umlaufen kann, definiert von einer Positionierachse (6) dieses Rotors, und mit einem mehrpoligen Permanentmagneten (10), der eine Rotorebene (12) senkrecht zu der Drehachse definiert und von einer Gruppe von Rotorpolpaaren (14) gebildet ist, die in kreisförmiger Weise um die Rotationsachse angeordnet sind, wobei die Anzahl dieser Rotorpolpaare (14) geradzahlig und größer als zwei ist, wobei jedes Rotorpolpaar eine Magnetachse (16) aufweist, orientiert in Richtung der Rotationsachse (8), mit einem Sinn entgegengesetzt jenem des benachbarten Rotorpolpaares und unter Definition eines Winkels α, dessen Wert gleich 360° dividiert durch die Anzahl der Rotorpolpaare ist, in der Rotorebene relativ zur Rotationsachse, welcher elektromagnetische Wandler dadurch gekennzeichnet ist, daß er N magnetische Speisemittel (58a, 58b, 58c) umfaßt, zugeordnet zu N Zweigen (56a, 56b, 56c) für das Führen von Magnetfluß, wobei N eine ganze Zahl größer als zwei ist, und daß er erste und zweite Hauptstatorpartien (22 und 24) umfaßt, wobei die erste Hauptstatorpartie (22) N magnetische Hauptpole (30, 31, 32) definiert, die magnetisch voneinander durch Zonen hoher magnetischer Reluktanz (34, 35, 36) isoliert sind, und mit einer ersten Überlagerungspartie, die den mehrpoligen Permanentmagneten relativ zu einer Projektion in die Rotorebene (12) überlagert, wobei jeder dieser Hauptmagnetpole mindestens einen Sekundärmagnetpol (38) umfaßt, der mindestens teilweise dem mehrpoligen Permanentmagneten (10) relativ zu einer Projektion in die Rotorebene überlagert ist, welche Sekundärmagnetpole eine erste Statorebene (46) parallel zur Rotorebene definieren, wobei jeder Sekundärmagnetpol einen Winkel in der ersten Statorebene relativ zur Drehachse definiert, dessen Größe gleich jener des Winkels α ist, wobei jeder Sekundärpol jedes der magnetischen Hauptpole winkelversetzt ist relativ zu jedem Sekundärpol jedes der beiden benachbarten magnetischen Hauptpole und relativ zur Rotationsachse um einen Abweichungswinkel, dessen Wert Modulo den Wert des Winkels α gleich dem Wert dieses Winkels α dividiert durch N ist, wobei die zweite Hauptpartie (24) einen Rücklaufmagnetpol bildet, von dem eine zweite Überlagerungspartie dem mehrpoligen Permanentmagneten relativ zu einer Projektion in die Rotorebene (12) überlagert ist, welche zweite Überlagerungspartie eine zweite Statorebene (70) parallel zur Rotorebene definiert, welche ersten und zweiten Statorebenen beidseits der Rotorebene liegen, wobei jeder der Führungszweige des Magnetflusses ein erstes Ende (55a, 55b, 55c) besitzt, magnetisch verbunden mit einem unterschiedlichen magnetischen Hauptpol, und ein zweites Ende (79b, 79b, 79c) besitzt, magnetisch verbunden mit dem Rücklaufpol.

2. Wandler nach Anspruch 1, dadurch gekennzeichnet, daß jeder der magnetischen Hauptpole (30, 31, 32) der ersten Statorhauptpartie (22) mindestens zwei magnetische Sekundärpole (38) umfaßt, wobei benachbarte magnetische Sekundärpole zu einem selben magnetischen Hauptpol gehörend in Winkelrichtung relativ zueinander versetzt sind in der ersten Statorebene (46) und relativ zu der Rotationsachse (8) um einen Winkel, dessen Wert gleich dem Zweifachen des Wertes des Winkels α ist.

3. Wandler nach Anspruch 2, dadurch gekennzeichnet, daß die erste und die zweite Statorhauptpartie (22 und 24) erste bzw. zweite, dem Permanentmagneten relativ zu einer Projektion in die Rotorebene (12) nicht überlagerte Partien umfassen, wobei diese ersten und zweiten nicht überlagerten Partien sich in ersten bzw. zweiten Hauptebenen (26 und 28) parallel zueinander befinden, wobei die Zweige (56a, 56b, 56c) zur Führung des Magnetflusses sich in dem Bereich befinden, der zwischen diesen ersten und zweiten Hauptebenen liegt, wobei jedes dieser magnetischen Speisemittel (58a, 58b, 58c) von einer Spule gebildet wird, die auf einem der verschiedenen Zweige montiert ist.

4. Wandler nach Anspruch 2 oder 3, dadurch gekennzeichnet, daß die erste Statorhauptpartie (22) vollständig eben ist und sich in der ersten Hauptebene (26) befindet.

5. Wandler nach Anspruch 2 oder 3, dadurch gekennzeichnet, daß die erste Überlagerungspartie der ersten Statorhauptpartie (22) mindestens teilweise eine Verdickung in Richtung des mehrpoligen Permanentmagenten (10) relativ zu der ersten Hauptebene (26) aufweist.

6. Wandler nach Anspruch 2 oder 3, dadurch gekennzeichnet, daß die erste Überlagerungspartie der ersten Statorhauptpartie (22) mindestens teilweise geprägt ist in Richtung des mehrpoligen Permanentmagneten (10) relativ zu der ersten Hauptebene (26).

7. Elektromagnetischer Wandler nach einem der Ansprüche 2 bis 6, dadurch gekennzeichnet, daß die Sekundärpole (38) der ersten Statorhauptpartie (22) von Zähnen (40) einer ersten runden Krone (44) gebildet sind.

8. Wandler nach einem der Ansprüche 2 bis 6, dadurch gekennzeichnet, daß die Sekundärpole (38), die zu ein- und demselben magnetischen Hauptpol (30, 31, 32) der ersten Statorhauptpartie (22) gehören, von Zähnen (40) gebildet sind, die miteinander über eine Versteifungsbrücke (84) derart verbunden sind, daß sie mindestens ein Fenster (86) begrenzen.

9. Wandler nach Anspruch 2 oder 3, dadurch gekennzeichnet, daß die erste Überlagerungspartie der ersten Statorhauptpartie (22) gewellt ist, wobei jeder der magnetischen Sekundärpole (38) dieser ersten Statorhauptpartie von einer Erhebung dieser ersten gewellen überlagerungspartie gebildet ist, welche Erhebung sich auf der Seite des mehrpoligen Permanentmagneten (10) befindet, relativ zu einer Mittelebene der Oberfläche dieser ersten gewellen Überlagerungspartie, welch letztere N gewellte Ringsektionen bildet, wobei jeder dieser gewellten Ringsektionen zu einem anderen magnetischen Hauptpol (30, 31, 32) gehört.

10. Wandler nach einem der Ansprüche 2 bis 9, dadurch gekennzeichnet, daß die zweite Überlagerungshauptpartie eine ebene Ringpartie (112) der zweiten Statorhauptpartie (24) definiert.

11. Wandler nach einem der Ansprüche 2 bis 9, dadurch gekennzeichnet, daß der Rücklaufmagnetpol (60) der zweiten Statorhauptpartie (24) ebenfalls Sekundärpole (68) umfaßt, die relativ zu einer Projektion in die Rotorebene (12) mindestens teilweise den Sekundärpolen (38) der ersten Statorhauptpartie (22) und mindestens teilweise dem mehrpoligen Permanentmagneten (10) überlagert sind, welche Sekundärpole (68) der zweiten Statorhauptpartie eine Winkelverteilung in der zweiten Statorhauptebene (70) relativ zur Drehachse (8) aufweisen, die identisch ist mit jener der Sekundärpole (38) der ersten Statorhauptpartie.

12. Wandler nach Anspruch 11, dadurch gekennzeichnet, daß die ersten und zweiten Überlagerungspartien vollständig zueinander relativ zu einer Projektion in die Rotorebene (12) überlagert sind.

13. Wandler nach Anspruch 11 oder 12, dadurch gekennzeichnet, daß die Sekundärpole (68) des Rücklaufmagnetpols (60) von den Zacken (66) einer zweiten runden Krone (64) gebildet sind.

14. Wandler nach Anspruch 11 oder 12, dadurch gekennzeichnet, daß die Sekundärpole (68) des Rücklaufmagnetpols (60) von Zacken (66) gebildet sind, die miteinander über eine runde Versteifungsbrücke (88) derart verbunden sind, daß sie eine Gruppe von Fenstern (90) bilden, die kreisförmig um die Rotationsachse (8) angeordnet sind.

15. Elektromagnetischer Wandler nach einem der Ansprüche 10 bis 14, dadurch gekennzeichnet, daß die zweite Überlagerungspartie der zweiten Statorhauptpartie (24) mindestens teilweise eine Verdickung in Richtung des mehrpoligen Permanentmagneten (10) relativ zu der zweiten Hauptebene (28) aufweist.

16. Wandler nach einem der Ansprüche 10 bis 14, dadurch gekennzeichnet, daß die zweite Überlagerungspartie mindestens teilweise in Richtung des mehrpoligen Permanentmagneten (10) relativ zu der zweiten Hauptebene (28) geprägt ist.

17. Wandler nach Anspruch 12 oder 13, dadurch gekennzeichnet, daß die zweite Überlagerungspartie eine Wellung (98) aufweist, wobei jeder der Sekundärpole (68) des Rücklaufmagnetpols (60) von einer Erhebung (104) dieser Wellung gebildet wird, welche Erhebung sich auf der Seite des mehrpoligen Permanentmagneten (10) relativ zur Mittelebene (102) der Oberfläche dieser Wellung (98) befindet.

18. Elektromagnetischer Wandler nach einem der Ansprüche 1 bis 17, dadurch gekennzeichnet, daß er einen Stabilisierungsring (80) umfaßt, der zwischen der ersten und der zweiten Statorhauptpartie (22 und 24) angeordnet ist.

19. Wandler nach einem der vorangehenden Ansprüche, dadurch gekennzeichnet, daß er vom dreiphasigen Typ ist, wobei N gleich drei ist.

## Claims

1. Electromagnetic transducer comprising a stator (2) and a rotor (4) mounted to rotate relative to the stator, said rotor being adapted to spin around a rotation axis (8), defined by a positioning axle (6) of such rotor, and including a multipolar permanent magnet (10) which defines a rotor plane (12) perpendicular to said rotation axis and is formed by a set of rotor pole pairs (14) arranged in a circular manner about said rotation axis, the number of such rotor pole pairs (14) being even and greater than two, each rotor pole pair having a magnetic axis (16) oriented along the direction of said rotation axis (8) with a sense opposite to that of the adjacent pole pairs and defining an angle α in said rotor plane relative to said rotation axis the value of which is equal to 360° divided by said number of rotor pole pairs, said electromagnetic transducer being characterized in that it includes N magnetic energization means (58a, 58b, 58c) respectively associated with N magnetic flux guidance branches (56a, 56b, 56c), N being an integer greater than two, and in that it comprises first and second principal stator parts (22 and 24), the first principal stator part (22) defining N principal magnetic poles (30, 31, 32) magnetically insulated from one another by zones of high magnetic reluctance (34, 35, 36) and comprising a first superposition portion superposed onto said multipolar permanent magnet relative to a projection thereof in said rotor plane (12), each of such principal magnetic poles comprising at least one secondary magnetic pole (38), which is at least partially superposed onto said said multipolar permanent magnet (10) relative to a projection thereof in said rotor plane, said secondary magnetic poles defining a first stator plane (46) parallel to said rotor plane, each secondary magnetic pole defining in said first stator plane an angle relative to said rotation axis the value of which is equal to that of said angle α, each secondary pole of each of said principal magnetic poles being angularly shifted relative to each secondary pole of each of the two adjacent principal magnetic poles and relative to said rotation axis by a deviation angle the value of which, modulo the value of said angle α is equal to said value of such angle αdivided by N, said second principal stator part (24) defining a magnetic return pole (60) a second superposition portion of which is superposed onto said multipolar permanent magnet relative to a projection thereof in said rotor plane (12), such second superposition portion defining a second stator plane (70) parallel to said rotor plane, said first and second stator planes being located on either side of said rotor plane, each of said magnetic flux guidance branches having a first end (55a, 55b, 55c) magnetically coupled to a different said principal magnetic pole and a second end (79a, 79b, 79c) magnetically coupled to said return pole.

2. Transducer according to claim 1, characterized in that each of said principal magnetic poles (30, 31, 32) of said first principal stator part (22) comprises at least two secondary magnetic poles (38), the adjacent secondary magnetic poles belonging to a common principal magnetic pole being angularly shifted relative to one another in the first stator plane (46) and relative to said rotation axis (8) through an angle the value of which is equal to twice the value of said angle α .

3. Transducer according to claim 2, characterized in that said first and second principal stator parts (22 and 24) respectively comprise first and second portions which are not superposed onto said permanent magnet relative to a projection thereof in said rotor plane (12), such first and second non-superposed portions being respectively basically located in first and second general planes (26 and 28) parallel to one another, said magnetic flux guidance branches (56a 56b, 56c) being basically located in the region comprised between such first and second general planes, each of said magnetic energization means (58a, 58b, 58c) being formed by a coil on a different said branch.

4. Transducer according to claim 2 or 3, characterized in that said first principal stator part (22) is entirely planar and located in said first general plane (26).

5. Transducer according to claim 2 or 3, characterized in that said first superposition portion of said first principal stator part (22) exhibits at least partially an over-thickness relative to said first general plane (26) in the direction of said multipolar permanent magnet (10).

6. Transducer according to claim 2 or 3, characterized said first superposition portion of said first principal stator part (22) is at least partially dished relative to said first general plane (26) in the direction of said multipolar permanent magnet (10).

7. Electromagnetic transducer according to any one of claims 2 to 6, characterized in that said secondary poles (38) of said first principal stator part (22) are formed by the teeth (40) of a first circular crenellation (44).

8. Transducer according to any one of claims 2 to 6, characterized in that the secondary poles (38) belonging to a common principal magnetic pole (30, 31, 32) of said first principal stator part (22) are formed by teeth (40) coupled among themselves by a stiffening bridge (84) so as to define at least one window (86).

9. Transducer according to claim 2 or 3, characterized in that the first superposition portion of said first principal stator part (22) is undulated, each of said secondary magnetic poles (38) of such first principal stator part being formed by a summit of such undulated superposition portion, such summit being located at the side of said multipolar permanent magnet (10) relative to a median plane of the surface of such undulated first superposition portion, such latter forming N undulated annular sections, each of such undulated annular sections belonging to a different principal magnetic pole (30, 31, 32).

10. Transducer according to any one of claims 2 to 9, characterized in that said second superposition portion defines a filled-in annular portion (112) of said second principal stator part (24).

11. Transducer according to any one of claims 2 to 9, characterized in that said return magnetic pole (60) of said second principal stator part (24) also includes secondary poles (68) superposed relative to a projection thereof onto said rotor plane (12), at least partially onto said secondary poles (38) of said first principal stator part (22) and at least partially onto said multipolar permanent magnet (10), the secondary poles (68) of the second principal stator part having an angular distribution in said second stator plane (70) relative to said rotation axis (8) identical to that of the secondary poles (38) of the first principal stator part.

12. Transducer according to claim 11, characterized in that said first and second superposition portions are entirely superposed onto one another relative to a projection thereof onto said rotor plane (12).

13. Transducer according to claim 11 or 12, characterized in that said secondary poles (68) of said return magnetic pole (60) are formed by the teeth (66) of a second circular crenellation (64).

14. Transducer according to claim 11 or 12, characterized in that said secondary poles (68) of said return magnetic pole (60) are formed by teeth (66) coupled among themselves by a circular stiffening bridge (88) in a manner to define a set of windows (90) circularly arranged around said rotation axis (8).

15. Transducer according to any one of claims 10 to 14, characterized in that said second superposition portion of said second principal stator part (24) exhibits at least partially an over-thickness in the direction of said multipolar permanent magnet (10) relative to said second general plane (28).

16. Transducer according to any one of claims 10 to 14, characterized in that said second superposition portion is at least partially dished in the direction of said multipolar permanent magnet (10) relative to said second general plane (28).

17. Transducer according to claim 12 or 13, characterized in that said second superposition portion exhibits an undulation (98), each of said secondary poles (68) of said return magnetic pole (60) being formed by a summit (104) of such undulation, such summit being located on the side of said multipolar permanent magnet (10) relative to the median plane (102) of the surface of such undulation (98).

18. Electromagnetic transducer according to any one of claims 1 to 17, characterized in that it comprises a stabilization ring (80) arranged between said first and second principal stator parts (22 and 24).

19. Transducer according to any one of the preceding claims, characterized in that it is of the three-phase type, N being equal to 3.
